Europäisches Patentamt

European Patent Office

Office européen des brevets

(19)

(11) Publication number: 0 388 030
A2

# (12) EUROPEAN PATENT APPLICATION

(21) Application number: 90301860.4

(51) Int. Cl.⁵: C08G 61/12

(22) Date of filing: 21.02.90

The title of the invention has been amended (Guidelines for Examination in the EPO, A-III, 7.3).

(30) Priority: 27.02.89 GB 8904457

(43) Date of publication of application:
19.09.90 Bulletin 90/38

(84) Designated Contracting States:
AT BE CH DE DK ES FR GB IT LI LU NL SE

(71) Applicant: IMPERIAL CHEMICAL INDUSTRIES PLC
Imperial Chemical House, Millbank
London SW1P 3JF(GB)

(72) Inventor: Daniels, James Anthony
1 Yarm Road, Hilton
Yarm, Cleveland(GB)
Inventor: Stephenson, Ian Richard
117 Thornwood Avenue, Ingleby Barwick
Thornaby, Stockton on Tees, Cleveland(GB)
Inventor: Colquhoun, Howard Matthew
8 Grove Park
Knutsford, Cheshire(GB)
Inventor: Lewis, David Frank
9 Blossom Heights, The Pippins, Moss Farm
Northwich, Cheshire(GB)

(74) Representative: Graham, John George et al
Legal Dept. Patents PO Box 6 Bessemer Road
Welwyn Garden City Hertfordshire AL7 1HD(GB)

(54) Polyarylketones.

(57) Polyketones, particularly polyetherketones, are formed by polycondensing at least one aromatic monomer having at least two hydrogen atoms, susceptible to electrophilic substitution with carbon dioxide in solution in the presence of an acid, eg the Lewis acid aluminium trichloride, capable of activating the condensation reaction.

EP 0 388 030 A2

## Aromatic Polymers

This invention relates to aromatic polymers.

Aromatic polyethers are known, useful polymers which have been produced by a variety of methods. The methods are usually based on two reaction types, namely electrophilic aromatic substitution (eg the polycondensation of acid chlorides or carboxylic and/or sulphonic acids with aryl ethers to produce ketone or sulphone linkages) and nucleophilic aromatic substitution (eg the polycondensation of activated aryl fluorides with phenoxides to produce ether linkages). Examples of such methods as applied to ketone polymers have recently been reviewed by M J Mullins and E P Woo, J Macromolecular Science - Rev. Macromol Chem Phys, C27 (2), 313, 1987.

Polyaryletherketones are particularly useful since they are usually crystalline, have relative high glass transition (Tg's) and melting temperatures (Tm's) and exhibit a variety of useful properties such as excellent electrical insulating and mechanical properties at high temperatures and high strength, toughness and resistance to fire and chemicals.

The majority of the processes to date for polyketone synthesis have the disadvantage of using expensive raw materials, thus making the resultant polymers expensive and thereby limiting their use to specialist applications only.

It is an object of the present invention to provide a potentially inexpensive route to synthesising polyarylketones, particularly polyaryletherketones.

According to the present invention, a process for making a polyarylketone comprises polycondensing at least one aromatic monomer having at least two hydrogen atoms susceptible to electrophilic substitution with carbon dioxide in solution in the presence of an acid capable of activating the condensation reaction.

The term "polyarylketone" used in the preceding paragraph and hereinafter is intended to mean aromatic polymers in which at least some of the aromatic moieties forming the polymer chain are connected by ketone linkages but it is not intended to exclude polymers in which other linkages, preferably selected from a direct link, -O-, -S-, -SO$_2$-or -CR$_2$- where R is hydrogen, C$_1$ to C$_4$ alkyl, phenyl or the two groups R (which otherwise may be the same or different) are joined externally to form a cycloaliphatic ring, are present. It is preferred, however, that the amount of -SO$_2$- linkages present in the polymer is not sufficient to substantially affect the solvent resistance of the polymer. Preferably, the ratio of -SO$_2$- linkages to -CO- linkages between aromatic moieties is not more than 1:5, preferably not more than 1:10.

Thus, monomers for use in the process of the invention are preferably selected from monomers having formula:-

H-Ar-H-

wherein Ar is a divalent aromatic residue comprised of at least two phenylene units connected by linkages selected from a direct link, -O-, -S-, -CO-, -SO$_2$- or -CR$_2$- where R is hydrogen, C$_1$ to C$_4$ alkyl, phenyl or the two groups R (which otherwise may be the same or different) are joined externally to form a cycloaliphatic ring, are present or of polynuclear aromatic units either alone or with like units and/or phenylene units linked as aforesaid.

Examples of preferred aromatic monomers for use in the invention are:-

diphenylether

4,4$'$-diphenoxybenzophenone

4,4$'$-diphenoxydiphenylsulphone

dibenzofuran

1,4-bis(4-phenoxybenzoyl)benzene (ie Ph-O-Ph-CO-Ph-CO-Ph-O-Ph where Ph is 1,4-phenylene)

and their thioether equivalents; and

biphenyl

1,2-, 1,3- or, preferably, 1,4-diphenylbenzene

naphthalene

anthracene

phenanthrene

or:-

Ph-CR$_2$-Ph

wherein Ph is 1,4-phelnylene and CR$_2$ is as herein before defined, R preferably being -C(CH$_3$)$_2$-.

If required, a small proportion (e.g. about 0.1%) of the aromatic monomers used in the invention can comprise a monomer which will end cap the polymer chain. For example, such a monomer is 4-phenoxybenzophenone.

Preferred aromatic monomers for use in the invention are diphenyl ether, 4,4$'$-diphenoxybenzophenone or dibenzofuran or mixtures thereof.

The use of 4,4'-diphenoxybenzophenone in the preparation of polymers based on diphenylether is particularly useful. In the preparation of polymers from diphenylether, the formation of phenylenexanthhydrol end groups is a known phenomenon, see for example US-A-3767620, US-A-4720537 and US-A-4808693, the latter document suggesting that the formation of phenylenexanthydrol end groups in the polymerisation of diphenylether and terephthaloyl chloride can be reduced by the inclusion of a third monomer selected from a group consisting of inter alia 4,4'-diphenoxybenzophenone.

In the process of the invention, it has been found particularly useful when making polymers containing the repeat unit:-

-Ph-O-Ph-CO-

to start with 4,4'-diphenoxybenzophenone whereby at least two such units are in sequence in the polymer thus avoiding the formation of the phenylenexanthydrol end groups, the polymer having predominantly phenoxy end groups.

The source of 4,4'-diphenoxybenzophenone can be any convenient source such as the Friedel-Crafts reaction of diphenylether and phosgene or diphenylether and 4-phenoxybenzoyl chloride or the nucleophilic reaction of difluorobenzophenone and phenol in N,N'-dimethylacetamide and in the presence of potassium carbonate although the latter reaction is economically unattractive for commercial processes.

It has also been proposed to make 4,4'-diphenoxybenzophenone by reacting diphenylether with carbon dioxide in the presence of a promoting agent, see EP-A-0323897, the promoting agent being an agent capable of converting a carboxylic acid or its salts to a Friedel-Crafts reactive derivative such as an anhydride or acid halide, but which agent itself does not enter into Friedel-Crafts type reactions. According to EP-A-0323897, it is not possible to obtain 4,4'-diphenoxybenzophenone in the absence of the promoting agent.

Contrary to such disclosure and in accordance with another aspect of the invention, 4,4'-diphenoxybenzophenone is prepared by reacting diphenylether and carbon dioxide in solution in the presence of an acid capable of activating the reaction but in the absence of a promoting agent defined as aforesaid.

The reaction of diphenylether and carbon dioxide will also produce small amounts of by-products resulting from ortho substitution (ie 9-xanthanone and possibly 2,4'-diphenoxybenzophenone). For this reason, together with the likely presence of residual diphenylether, it is preferable to isolate the 4,4'-diphenoxybenzophenone before proceeding to the polymerisation process in accordance with the invention. Clearly, however, once isolated the 4,4'-diphenoxybenzophenone can be used in other processes whether for making polymer or not.

The process for making polymer according to the invention can include the further step of reacting the product of the carbon dioxide reaction, particularly product which is of relatively low molecular weight, ie oligomeric species, with other suitable monomers, eg terephthaloyl chloride, isophthaloyl chloride and similar dicarboxylic acid derivatives, in the presence of an acid capable of activating the reaction.

Preferably, the acid used in both the process for making polymer according to the invention and the process for making 4,4'-diphenoxybenzophenone is a Lewis acid which functions as a Friedel-Crafts activator. Suitable compounds are aluminium chloride, aluminium bromide, ferric chloride, ferric bromide, antimony pentachloride, titanium tetrachloride, gallium chloride, molybdenum hexachloride and zinc chloride, but preferred compounds are aluminium chloride ($AlCl_3$) or aluminium bromide($AlBr_3$); or the acid is superacid such as $HF/BF_3$ or a fluoroalkane sulphonic acid, more particularly trifluoromethane sulphonic acid ($CF_3SO_2OH$).

The acid has to fulfil a number of roles in the reaction: ie to complex with the carbon dioxide to activate it toward acylating the monomer and the oligomeric and polymeric intermediates; to solvate those intermediates and the polymer during the reaction period; and to assist in removing the water formed during the condensation step of the reaction from the reaction process. Consequently, the molar ratio of acid to monomer for the process of making polymer in accordance with the invention is at least 1.5:1 and is preferably at least 3:1. If the starting monomers contain ketone or sulphone groups then it is preferred to include one additional equivalent for each ketone group present and two additional equivalents for each sulphone group present.

The molar ratio of acid to diphenylether in the process for making 4,4'-diphenoxybenzophenone is preferably at least 1:1 but is not more than about 1.5:1 to limit the formation of oligomeric and polymeric species.

When the acid is a Friedel-Crafts activator, a solvent has to be provided. Suitable solvents are aprotic solvents which do not contain strong Lewis base substituents and which are thermally stable in the presence of the Friedel-Crafts activator at the reaction temperatures involved, i.e. up to about 200°C. Preferred solvents are 1,2-dichlorobenzene and 1,2,4-trichlorobenzene. Alternatively, in the process of making 4,4'-diphenoxybenzophenone, the diphenylether itself can function as the solvent, the quantity of acid controlling the quantity of product obtained.

When the acid is a superacid, the acid itself functions as a solvent.

The reaction solution, both for polymerisation and for the preparation of 4,4'-diphenoxybenzophenone, is saturated with carbon dioxide, preferably under pressure, typically 45-55 bar (at ambient temperature). Carbon dioxide/inert gas (e.g. nitrogen) mixtures can be used, the partial pressure of carbon dioxide preferably being at least 10 bar.

Typical reaction temperatures are in the range 80°C to 200°C, preferably 100°C to 180°C, more particularly 140°C to 180°C for the polymerisation reaction and 110°C to 180°C for the preparation of 4,4'-diphenoxybenzophenone; and typical reaction times are 0 to 24 hours, the reaction times being the time the reaction vessel, e.g. an autoclave, is held at the reaction temperature, there being a preheating period (typically 1/2 hour to 2 hours) and a cooling period (typically 12 hours to 18 hours).

The invention is illustrated by reference to the following examples.

In Examples 1 to 9, the following general method was adopted.

A 1.5 l glass liner, purged with dry nitrogen, was charged with the acid, the monomer and the solvent, and the liner was then placed in an autoclave vessel. The vessel was pressure tested with dry nitrogen (100 bar). Following release of the pressure, the vessel was charged with carbon dioxide, the pressure released and the unit then being re-pressurised with carbon dioxide. (NB In Example 4, a part of the overall pressure was achieved using nitrogen). The contents of the autoclave vessel were agitated for several minutes with the carbon dioxide supply open to ensure the reaction mixture was saturated at the selected pressure. The vessel was then isolated.

The vessel was then subjected to a temperature cycle consisting of a preheating period of 1 1/4 hours, a reaction period and a cooling period of 16 hours following which the vessel was vented to ambient pressure.

The liner was removed from the vessel, the solvent disposed of and the crude product was chipped out of the vessel. The crude product was ground to powder and the resultant powder was poured into stirred methanol to break down the polymer/acid complex.

The crude product was then extracted using conventional extraction techniques typically employing aliphatic alcohols, water, dimethylformamide, acetone, hydrochloric acid etc.

The reactions conditions and the product properties are summarised in Tables I and II, respectively. The abbreviations used in Table 1 are:-

DPO : diphenyl ether

DBF : dibenzofuran.

The reactions were carried out in 150ml of 1,2,4-trichlorobenzene except for reaction 3 which was carried out in 150ml of 1,2-dichlorobenzene.

The inherent viscosities of the polymeric products were determined using a 0.1% solution in concentrated sulphuric acid (98%) at 25°C and the Tg and Tm were determined using a differential scanning calorimetor.

4

TABLE I

| Example No | Monomer | Acid AlCl$_3$ | Gas pressure at ambient | Reaction Temp | Reaction Period |
|---|---|---|---|---|---|
| | (g/moles) | (g/moles) | (bar) | (°C) | (hour) |
| 1 | DPO (12.75/0.075) | (30.00/0.225) | CO$_2$ (54) | 160 | 1/2 |
| 2 | DPO (12.75/0.075) | (30.00/0.225) | CO$_2$ (54) | 160 | 16 |
| 3 | DPO (12.75/0.075) | (30.00/0.225) | CO$_2$ (42) | 120 | 16 |
| 4 | DPO (12.75/0.075) | (30.00/0.225) | CO$_2$ (27) N$_2$ (27) | 160 | 1/2 |
| 5 | DPO (12.75/0.075) | (30.00/0.225) | CO$_2$ (54) | 160 | 1/4 |
| 6 | DBF (12.60/0.075) | (30.00/0.225) | CO$_2$ (50) | 160 | 4 |
| 7 | DPO (9.56/0.056) DBF(3.024/0.0181) | (30.00/0.225) | CO$_2$ (54) | 160 | 2 |
| 8 | DPO(6.375/0.0375) DBF(6.300/0.0375) | (30.00/0.225) | CO$_2$ (51) | 160 | 16 |
| 9 | DPO (10.20/0.06) DBF (2.52/0.015) | (30.00/0.225) | CO$_2$ (43) | 160 | 3 |

TABLE II

| Example No | Yield (%) | Inherent viscosity (dlg$^{-1}$) | Tg (°C) | Tm (°C) | Comments |
|---|---|---|---|---|---|
| 1 | 95.4 | 0.56 | 156.02 | 362.4 | Off-white colour. |
| 2 | 84.2 | 0.37 | 158.5 | 349.3 | Beige colour. |
| 3 | 91.0 | 0.23 | 156.6 | 360.5 | Amber colour. Nmr spectroscopy comparison with commercially available equivalent material confirmed the structure as repeat units of formula II. |
| 4 | 84.4 | 0.44 | 154.6 | 359.8 | Pale brown colour. |
| 5 | 84.8 | 0.41 | 157.2 | 365.0 | Off-white colour. |
| 6 | 86.6 | 0.44 | 295.3 | - | Amber colour. DSC analysis showed product to be amorphous. |
| 7 | 89.0 | 0.33 | 164.8 | 315.1 | Off-white colour. Crystallising exotherm at approximately 280° C. |
| 8 | 97.9 | 0.49 | 229.2 | - | Pale brown colour. DSC analysis showed product to be amorphous. |
| 9 | 87.7 | 0.42 | 173.7 | 318.3 | Off-white colour. DSC data obtained after annealing at 270° C for 1 hour. |

### Example 10

Using a method similar to the general method of Examples 1 to 9, diphenylether (5.10g, 0.030mole), aluminium chloride (12.00g, 0.0899mole) and 1,2,4-trichlorobenzene (60ml) were charged into a 125ml Hastelloy C autoclave having a plunger-driven agitator. The autoclave was pressurised at ambient temperature to 55 bar with carbon dioxide and the reaction mixture was heated to 160°C over 30 minutes whilst being agitated during which time the pressure rose to 125.5 bar. The reaction mixture was maintained at that temperature for 30 minutes following which the autoclave was cooled by removing the heating jacket and immersing in cold water. The autoclave was opened and methanol was added to the reaction mixture to assist in removing the mixture from the autoclave. The rubbery product was scrapped from the autoclave, ground finely as possible and washed with fresh methanol until it was free of reaction solvent. The product was further purified by extraction with boiling methanol and three times with boiling water, the product being filtered off the liquor following each extraction. The product was then dried in a vacuum oven to give an off-white powder (5.0g, 85% yield).

The polymer had an inherent viscosity of 0.37 dlg$^{-1}$. DSC analysis showed the polymer to have a Tm = 365.7°C and a small Tg 147°C. Using C$^{13}$ nmr analysis, the polymer was determined to have repeat units:-

-Ph-O-Ph-CO-

and predominantly phenylenexanthydrol end groups.

### Example 11

Diphenylether (100g, 0.588mole), aluminium chloride (117.80g, 0.882mole) and 1,2-dichlorobenzene (300ml) were charged into a 1l Hastelloy B2 autoclave having a stirrer. The autoclave was pressure tested with nitrogen and then pressurised at ambient temperature to 45 bar with carbon dioxide, the carbon dioxide supply being left open for about 10 minutes whilst the mixture was vigorously stirred. The gas supply was then closed and the reaction mixture was heated to 120°C whilst being agitated during which time the pressure rose to 66 bar. The reaction mixture was maintained at that temperature for 1 hour following which the autoclave was cooled and opened. The red reaction mixture was cautiously poured into methanol (1l) resulting in the formation a thick pale pink precipitate. The precipitate was filtered off, washed thoroughly with methanol, dried using a sinter and extracted three times with water, the precipitate being filtered off the liquor following each extraction. The precipitate was then dried in a vacuum oven to give an off-white powder of crude 4,4'-diphenoxybenzophenone (43.0g, 40% yield), Tm = 138°C. The infra-red spectrum (carbonyl group line at 1644.1 cm$^{-1}$) and thin layer chromatography analysis (elutant 90% hexane/10% ethyl acetate) was the same as those obtained for 4,4'-diphenoxybenzophenone made by other routes.

Further purification of the product by recrystallisation from methanol/toluene resulted in a purified product of Tm = 146°C.

### Example 12

Diphenylether (100g, 0.588mole) and aluminium chloride (30.0g, 0.225mole) were charged into the autoclave used in Examples 1 to 9, the autoclave being purged with nitrogen. The autoclave was then pressurised to 50 bar at ambient temperature and heated to 180°C during which time the pressure rose to 80 bar. The autoclave was rocked at that temperature for 5 hours, allowed to cool and opened. The orange reaction mixture was quenched in water and the product was then extracted with hot methanol and hot water, the product being filtered off the liquor following each extraction. The product was dried in a vacuum oven to give an off-white powder (17.12g) identified by melting point (144.5°C) and infra-red spectrum as 4,4'-diphenoxybenzophenone.

### Example 13

4,4'-diphenyoxybenzophenone (30g, 0.082mole), aluminium chloride (49.2g, 0.369mole) and 1,2,4-trichlorobenzene (400ml) were charged into a 1l Hastelloy B2 autoclave having a stirrer. The autoclave was pressure tested with nitrogen and then pressurised at ambient temperature to 47 bar with carbon dioxide, the carbon dioxide supply being left open for about 10 minutes whilst the mixture was vigorously stirred. The gas supply was then closed and the reaction mixture was heated to $160^\circ$C over a period of 1 hour whilst being agitated during which time the pressure rose to 67 bar. The reaction mixture was maintained at that temperature for 4 hours following which the autoclave was cooled and opened. The product, a red fibrous solid was removed from the autoclave (the solvent having been discarded). The product was ground to a powder and quenched in methanol (1l). The resultant solid was filtered off and purified as described in previous examples. The final product (23.38g, 73.2% yield) had an inherent viscosity of $0.5 dlg^{-1}$, a Tg = $148^\circ$C and a Tm = $365^\circ$C.

Example 14

Example 13 was repeated using 4,4'-diphenyoxybenzophenone (25g, 0.063mole), aluminium chloride (46.2g, 0.347mole) and 1,2,4-trichlorobenzene (400ml). The reaction mixture was heated to $160^\circ$C over 30 minutes (carbon dioxide pressure 39 bar at ambient temperature and 53 bar at the reaction temperature) and was maintained at that temperature for 4 hours. The final product was a pale brown amorphous polymer (14.6g, 54.7% yield) having an inherent viscosity of $0.26 dlg^{-1}$ and a Tg = $175.2^\circ$C.

Example 15

Example 13 was repeated using 1,4-bis-(4phenyoxybenzoyl)benzene (30g, 0.064mole), aluminium chloride (42.55g, 0.319mole) and 1,2,4-trichlorobenzene (400ml). The reaction mixture was heated to $160^\circ$C over 30 minutes (carbon dioxide pressure 39 bar at ambient temperature and 53 bar at the reaction temperature) and was maintained at that temperature for 4 hours. The final product was a white powder (18.79g, 59.4% yield) having an inherent viscosity of $0.084 dlg^{-1}$. DSC analysis of the product gave a main Tm = $325^\circ$C and several lower melting endotherms, which data coupled with the low inherent viscosity suggesting the presence of low molecular weight species.

Example 16

Example 15 was repeated but the initial carbon dioxide pressure was such that the final pressure at the reaction temperature of $160^\circ$C was 83 bar and the reaction period was 2 hours. Quenching the crude product in methanol produced a fine dispersion of low molecular weight material and larger particles of higher molecular weight material. The fine particles were decanted off as a slurry and the larger particles were isolated by filtration and purified as described in the preceding Examples. The product (7.31g, 23.1% yield) had an inherent viscosity of $0.23 dlg^{-1}$ and a Tm = $350^\circ$C.

**Claims**

1. A process for making a polyarylketone comprising polycondensing at least one aromatic monomer having at least two hydrogen atoms susceptible to electrophilic substitution with carbon dioxide in solution in the presence of an acid capable of activating the condensation reaction.

2. A process according to claim 1, in which said at least one monomer is selected from monomers having formula:-

H-Ar-H

wherein Ar is a divalent aromatic residue comprised of at least two phenylene units connected by linkages selected from a direct link, -O-, -S-, -CO-, -SO$_2$- or -CR$_2$- where R is hydrogen, C$_1$ to C$_4$ alkyl, phenyl or the two groups R (which otherwise may be the same or different) are joined externally to form a cycloaliphatic ring, are present or of polynuclear aromatic units either alone or with like units and/or phenylene units linked as aforesaid.

3. A process according to claim 1 or claim 2, in which said at least one monomer is selected such that the ratio of -SO$_2$- linkages to -CO-linkages between aromatic moieties is not more than 1:5, preferably not more than 1:10.

4. A process according to any one of the preceding claims, in which said at least one monomer is selected from:-
diphenylether
4,4′-diphenoxybenzophenone
4,4′-diphenoxydiphenylsulphone
dibenzofuran
1,4-bis(4-phenoxybenzoyl)benzene;
and their thioether equivalents; and
biphenyl
1,2-, 1,3- or, preferably, 1,4-diphenylbenzene
naphthalene
anthracene
phenanthrene or:-
Ph-CR$_2$-Ph
wherein Ph is 1,4-phenylene and CR$_2$ is as herein before defined, R preferably being -C(CH$_3$)$_2$-.

5. A process according to any one of the preceding claims, in which, when the resultant polymer contains repeat units of formula:-
-Ph-O-Ph-CO-
wherein Ph is 1,4-phenylene, said at least one monomer comprises 4,4′-diphenoxybenzophenone either alone or together with other monomers but excluding diphenylether.

6. A process for making 4,4′-diphenoxybenzophenone comprises reacting diphenylether and carbon dioxide in solution in the presence of an acid capable of activating the reaction but in the absence of a promoting agent as hereinbefore defined.

7. A process according to any one of the preceding claims, in which said acid is selected from aluminium chloride, aluminium bromide, ferric chloride, ferric bromide, antimony pentachloride, titanium tetrachloride, gallium chloride, molybdenum hexachloride and zinc chloride, preferably aluminium chloride or aluminium bromide; or from HF/BF$_3$ or a fluoroalkane sulphonic acid, more particularly trifluoromethane sulphonic acid.

8. A process according to claim 1 and to any preceding claim dependent on claim 1, in which the molar ratio of acid to monomer is at least 1.5:1, preferably at least 3:1.

9. A process according to claim 6 and to any preceding claim dependent on claim 6, in which the molar ratio of acid to diphenylether at least 1:1 but is not more than about 1.5:1.

10. A process according to any one of the preceding claims, in which the reaction is carried out in a reaction vessel pressurised with carbon dioxide to a partial pressure of at least 10 bar and in which the reaction is carried out at temperatures in the range 80°C to 200°C, preferably 100°C to 180°C.